# EUROPÄISCHE PATENTSCHRIFT

(11) **EP 2 517 217 B1**
(45) Veröffentlichungstag und Bekanntmachung des Hinweises auf die Patenterteilung: **19.08.2020**
(21) Anmeldenummer: 10801581.9
(22) Anmeldetag: 21.12.2010
(51) Int. Cl.: H01G 4/258

(54) **TEMPERATURUNHABHÄNGIGER KONDENSATOR UND KONDENSATORMODUL**
TEMPERATURE INDEPENDENT CAPACITOR AND CAPACITOR MODULE
CONDENSATEUR INDEPENDANT DE LA TEMPERATURE ET MODULE DE CONDENSATEUR

(30) Priorität: 21.12.2009 DE 102009059879
(43) Veröffentlichungstag der Anmeldung: 31.10.2012
(73) Patentinhaber: TDK Electronics AG, 81671 München (DE)
(72) Erfinder: TESTINO, Andrea, CH-5417 Untersiggenthal (CH); ENGEL, Günter, A-8430 Leibnitz (AT); SCHOSSMANN, Michael, A-8523 Frauental (AT); KOINI, Markus, A-8054 Seiersberg (AT); HOFFMANN, Christian, 83075 Bad Feilnbach (DE)
(74) Vertreter: Epping - Hermann - Fischer
(86) Internationale Anmeldenummer: PCT/EP2010/070426
(87) Internationale Veröffentlichungsnummer: WO 2011/085932

(56) Entgegenhaltungen:
- DE-C- 926 925
- FR-A- 891 943
- FR-A- 1 426 596
- JP-A- H04 364 014
- US-A1- 2009 080 137

## Beschreibung

Es wird ein Kondensator nach dem Anspruch 1 angegeben.

Ein weit verbreitetes Problem von Kondensatoren ist es, deren Leistung zu erhöhen.

Die Druckschrift FR 1 426 596 A beschreibt ein Bauelement zur Temperaturmessung und -kontrolle. In der Druckschrift DE 926 925 C wird ein regelbarer elektrischer Kondensator beschrieben, dessen Kapazität temperaturunabhängig ist oder sich mit der Temperatur nach einer bestimmten Gesetzmäßigkeit ändert. Die Druckschrift JP H04 364014 A beschreibt einen mehrschichtigen keramischen Kondensator. In der Druckschrift US 2009/080137 A1 werden ein vielschichtiges keramisches Bauelement und ein Montageträger dafür beschrieben. In der Druckschrift FR 891 943 A wird ein durch Temperatureinwirkung veränderbarer elektrischer Kondensator beschrieben.

Bisher wurde das Problem dadurch gelöst, dass dielektrische Materialien mit unterschiedlichen Dotierungen in aufeinanderfolgenden Schichtenfolgen angeordnet wurden, beispielsweise als Kern und Hülle. Für die dielektrischen Materialen werden bei herkömmlichen Kondensatoren in der Regel Materialen verwendet, deren Dielektrizitätskonstanten in einem weiten Bereich weitgehend unabhängig von der Temperatur sind. Dadurch soll vermieden werden, dass bei Änderung der Umgebungstemperatur sich die Dielektrizitätskonstante des dielektrischen Materials des Kondensators ändert, und somit auch die elektrischen Eigenschaften des Kondensators.

Die Aufgabe wird durch einen Kondensator gemäß dem Anspruch 1 gelöst. Weitere Ausführungsformen des Kondensators, sowie Kondensatormodule sind Gegenstand weiterer abhängiger Patentansprüche.

Eine Ausführungsform der Erfindung betrifft einen Kondensator umfassend die folgenden Bestandteile:
- ein erstes Heizelement,
- einen ersten Kondensatorbereich umfassend:
   -- dielektrische Schichten,
   -- Innenelektroden, welche zwischen den dielektrischen Schichten angeordneten sind,
wobei das erste Heizelement und der erste Kondensatorbereich thermisch leitend miteinander verbunden sind.

Dadurch, dass der Kondensator ein Heizelement umfasst, welches thermisch leitend mit dem Kondensatorbereich verbunden ist, kann Wärme, welche in dem Heizelement erzeugt wird, auf dem Kondensatorbereich übertragen werden. Durch die kontrollierte Wärmezufuhr auf den Kondensatorbereich kann die Leistungsfähigkeit des Kondensators gezielt gesteigert werden. Die Leistungssteigerung kann beispielsweise daraus resultieren, dass die Dielektrizitätskonstante der dielektrischen Schichten mit zunehmender Temperatur ansteigt. Durch die aufgrund der erhöhten Wärmezufuhr von dem Heizelement erhöhten Dielektrizitätskonstante der dielektrischen Schichten kann somit die Leistung des Kondensators erhöht werden.

Ein solcher Kondensator ist beispielsweise gut für den Einsatz für Hochleistungs-AC/DC-Wandler und Hochleistungs-DC/DC-Wandler geeignet, da dieser eine hohe Leistungsdichte aufweist.

Bei einer Ausführungsform der Erfindung umfasst die dielektrische Schicht ein Material, dessen Dielektrizitätskonstante von der Temperatur abhängig ist.

Vorzugsweise ist die Dielektrizitätskonstante stark von der Temperatur abhängig. Besonders bevorzugt nimmt die Dielektrizitätskonstante mit steigender Temperatur zu. Somit wird für einen erfindungsgemäßen Kondensator vorzugsweise ein Material verwendet, dessen Dielektrizitätskonstante nicht wie bei den herkömmlichen Kondensatoren weitgehend temperaturunabhängig ist, sondern im Gegenteil dessen Dielektrizitätskonstante bei steigender Temperatur einen deutlichen Anstieg aufweist. Hierdurch kann durch Wärmezufuhr in die dielektrischen Schichten die Dielektrizitätskonstante gezielt erhöht werden. Durch eine Steigerung der Dielektrizitätskonstante der dielektrischen Schichten kann die Leistung des Kondensators erhöht werden. Dies bedeutet im Umkehrschluss, dass ein deutlich kleinerer Kondensator im Bezug auf das Volumen der dielektrischen Schicht gefertigt werden kann, welcher die gleiche Leistung aufweist, wie ein nichterfindungsgemäßer, herkömmlicher Kondensator, der kein Heizelement aufweist. Somit ist eine Miniaturisierung des Kondensators möglich. Dies führt unter anderem zu einer Materialeinsparung, welche auch eine Kosteneinsparung mit sich bringt.

In einer weiteren Ausführungsform der Erfindung ist das erste Heizelement so eingerichtet, dass es auf eine Temperatur aufgeheizt werden kann, bei der die Dielektrizitätskonstante des Materials einen Wert erreicht, der über dem Durchschnittswert liegt, der sich aus den Werten für die Dielektrizitätskonstante bei Raumtemperatur und der für das Material maximal möglichen Dielektrizitätskonstanten ergibt.

Vorzugsweise kann das erste Heizelement auf eine Temperatur aufgeheizt werden, bei der die Dielektrizitätskonstante näher an der maximal möglichen Dielektrizitätskonstante liegt als am Durchschnittswert. Besonders bevorzugt kann das erste Heizelement auf eine Temperatur aufgeheizt werden, bei der das Material der dielektrischen Schicht eine maximale Dielektrizitätskonstante aufweist. Ebenfalls bevorzugt kann das Heizelement so eingerichtet werden, dass das Material der dielektrischen Schicht auf eine Temperatur aufgeheizt wird, bei der die Gesamtleistung des Kondensators optimiert ist, also die Summe aus Dielektrizitätskonstanten und dielektrischem Verlust einen optimalen Wert ergeben.

Dies ist zum einen dadurch möglich, dass das erste Heizelement auf das Material der dielektrischen Schichten abgestimmt wird, also auf eine Temperatur eingestellt werden kann, bei der die dielektrische Schicht eine hohe Dielektrizitätskonstante aufweist. Zum anderen ist es ebenso möglich, die dielektrische Schicht beispielsweise durch Dotierung auf ein vorgegebenes erstes Heizelement, welche eine bestimmte Heiztemperatur erreichen kann, einzustellen.

In einer weiteren Ausführungsform umfassen die dielektrischen Schichten Ba₁₋ₓSrₓTi_{1-y}Zr_{y}O₃, wobei gilt: 0 < x < 1; 0 ≤ y < 1.

Bei Bariumtitanat beziehungsweise deren entsprechenden dotierten Varianten kann es sich um Ferroelektrika handeln.
Als Ferroelektrika bezeichnet man eine Klasse von Materialien, die auch ohne äußeres angelegtes Feld eine Polarisation besitzen. Die Eigenschaft der Ferroelektrizität verschwindet oberhalb einer charakteristischen Temperatur, der Curie-Temperatur. Diesen Übergang bezeichnet man als Phasenübergang. Oberhalb dieser Temperatur verschwindet die Polarisation und man bezeichnet die Substanz dann als Paraelektrika. Im ferroelektrischen Zustand sind die Zentren positiver und negativer Ladung, beispielsweise die Anionen und Kationen, relativ zu einander verschoben. Im Falle des Bariumtitanats ist beispielsweise das Ti⁴⁺ relativ zu den Sauerstoffionen O²⁻ verschoben. Oberhalb von 120 °C verschwindet die Ferroelektrizität von Bariumtitanat und dieses verhält sich wie ein paraelektrisches Dielektrikum.

Bei Bariumstrontiumtitanat (BST) findet ein Phasenübergang von der tetragonalen, ferroelektrischen Phase zur kubischen, paraelektrischen Phase im Bereich der Curie-Temperatur T_{c} statt. Die genaue Curie-Temperatur Tc ist hierbei von der genauen Zusammensetzung, also der Dotierung, des Bariumstrontiumtitanats abhängig.

In einer weiteren Ausführungsform der Erfindung umfassen die dielektrischen Schichten als Dotierstoff einen der folgenden Ionen oder Kombination daraus: Pb, Ca, Sn, Zr, Sr, Bi, Hf.

Durch die Dotierung der dielektrischen Schichten kann die Curie-Temperatur T_{c}, bei der der Phasenübergang eintritt, verschoben werden. Die Curie-Temperatur Tc kann hierdurch in einen Temperaturbereich verschoben werden, der in den dielektrischen Schichten durch die Wärmezufuhr aus dem Heizelement erreicht wird. Somit kann durch ein Anlegen einer Spannung an das Heizelement und die hieraus resultierende Wärme, welche auf die elektrischen Schichen übertragen wird, in diesen eine Phasenumwandlung bewirkt werden. Über die Phasenumwandlung können die ferroelektrischen beziehungsweise paraelektrischen Eigenschaften wie beispielsweise die Dielektrizitätskonstante ε der dielektrischen Schichten verändert werden.

In einer weiteren Ausführungsform der Erfindung umfassen die dielektrischen Schichten einen der folgenden Dotierstoffe beziehungsweise Kombinationen daraus: Ni, Al, Mg, Fe, Cr, Mn.

Durch die Dotierung der dielektrischen Schichten mit diesen Dotierstoffen kann der dielektrische Verlust des Kondensatorbereiches reduziert werden.

In einer weiteren Ausführungsform der Erfindung umfassen die dielektrischen Schichten einen der folgenden Dotierstoffe beziehungsweise Kombinationen daraus: Si, Al, B, Cu, Zn.

Durch eine Dotierung der dielektrischen Schichten mit diesen Dotierstoffen kann das Sinterverhalten, wie beispielsweise das Schrumpfverhalten oder der thermische Ausdehnungskoeffizient, der dielektrischen Schichten beeinflusst werden. Vorzugsweise weisen alle dielektrischen Schichten des Kondensators ein vergleichbares Sinterverhalten auf.

Die dielektrischen Schichten können auch aus einer Mischung von unterschiedlichen keramischen Phasen bestehen, nämlich beispielsweise aus einer Perovskitphase und einer weiteren dielektrischen Keramik mit einer geringeren Dielektrizitätskonstante, wie beispielsweise Zirkonate, Silikate, Titanate, Aluminate, Stanate, Niobate, Tantalate oder Seltenerdmetalloxiden. Des Weiteren können die dielektrischen Schichten Elemente aus der Gruppe 1A und 2A umfassen. Die dielektrischen Schichten können auch die folgenden Elemente beziehungsweise deren Oxide umfassen: Ti, V, Cr, Mn, Zr, Nb, Mo, Hf, Ta und W. Die dielektrischen Schichten können Elemente oder Oxide der Seltenerdmetalle, wie beispielsweise Sc, Y, La, Ce, Pr und Nd sowie Mischungen daraus umfassen.

Die dielektrischen Schichten weisen ein antiferroelektrisches Material auf. Solche Materialien weisen neben der Temperaturabhängigkeit ihrer Dielektrizitätskonstante weiterhin eine Zunahme der Dielektrizitätskonstante mit steigendem elektrischem Feld oberhalb einer so genannten Schaltfeldstärke auf (antiferroelektrischer Effekt). Die Temperaturabhängigkeit solcher Materialien weist zwei Stufen auf: Mit steigender Temperatur nähert sich die antiferroelektrische Phase in einem Phasendiagramm dem Übergang in die ferroelektrische Phase, während die antiferroelektrische Kopplung schwächer wird, womit sich auch die antiferroelektrische Hysterese ändert. Steigt die Temperatur weiter an, wird die Hysterese schmaler und flacher, was eine geringere differentielle Dielektrizitätskonstante, das heißt eine geringere Änderung der Dielektrizitätskonstante bei vorgegebener Spannung als Funktion der Temperatur, mit sich führt.

Somit kann mit einem geeigneten antiferroelektrischen Material bei einer bestimmten Temperatur, also unter thermischer Stabilisierung, ein Arbeitsbereich bestimmt werden, der die bestmögliche Ausnutzung des antiferroelektrischen Effektes und gleichzeitig Sicherheit gegenüber dem Übergang in die ferroelektrische Phase bietet. Über die Temperatur kann auch die Änderung der Dielektrizitätskonstante bei gegebener Spannung vorbestimmt werden. Für die Ausnutzung dieses Effektes müssen keine

Sicherheitsvorkehrungen im Design des Kondensators vorgenommen werden.

Beispielsweise können antiferroelektrische Materialien der dielektrischen Schichten ausgewählt sein aus einer Gruppe, die Pb_{0,925}La_{0,06} (Zr_{0,86}Ti_{0,14})O₃, Pb_{0,895}La_{0,08}(Zr_{0,80}Ti_{0,20})O₃, Pb_{0,880}La_{0,09}(Zr_{0,80}Ti_{0,20})O₃, [0,92 (Bi_{0,5}Na_{0,5}) TiO₃] - [0,06BaTiO₃] - [0,02 (K_{0,5}Na_{0,5}) NbO₃], [0,885 (Bi_{0,5}Na_{0,5}) TiO₃] - [0,05 (Bi_{0,5}K_{0,5}) TiO₃] - [0,015 (Bi_{0,5}Li_{0,5}) TiO₃] - [0,05BaTiO₃], [0,71 (Bi_{0,5}Na_{0,5}) TiO₃] - [0,18BaTiO₃] - [0,11Bi (Mg_{0,5}Ti_{0,5}) O₃] und [0,77 (Bi_{0,5}Na_{0,5}) TiO₃] - [0,20 (Bi_{0,5}K_{0,5}) TiO₃] - [0,03 NaNbO₃] umfasst.

Es handelt sich bei dem ersten Heizelement um ein PTC-Element, welches ein Keramikmaterial mit einem positiven Temperaturkoeffizienten bezüglich des Widerstandes umfasst.

Durch das Anlegen von Spannung an dieses PTC-Element kann dieses aufgeheizt werden, und die so generierte Wärme auf die dielektrischen Schichten des Kondensatorbereichs übertragen werden. Das PTC-Element kann hierbei ein Keramikmaterial umfassen, welches so dotiert ist, dass dieses auf die gewünschte Temperatur aufgeheizt werden kann.

In einer weiteren Ausführungsform der Erfindung umfasst das PTC-Element Ba₁₋ₓSrₓTi_{1-y}Zr_{y}O₃, wobei gilt: 0 < x < 1; 0 ≤ y < 1.

In einer weiteren Ausführungsform der Erfindung weist das PTC-Element einen Dotierstoff auf.

Bei dem Dotierstoff kann es sich beispielsweise um Pb, Ca, Sn, Zr, Sr, Bi, Hf oder eine Kombination dieser Ionen handeln. Durch die Dotierung des PTC-Elements mit diesen Elementen kann der Temperaturbereich, der durch das Anlegen einer Spannung erreicht werden kann, variiert werden. Somit kann beispielsweise der Temperaturbereich durch die Dotierung erhöht werden, wodurch mehr Wärme erzeugt werden kann, welche auf den Kondensatorbereich bzw. die dielektrischen Schichten übertragen werden kann.

Bei den Dotierstoffen kann es sich beispielsweise auch um Si, Al, B, Cu, Zn und Kombinationen dieser Elemente handeln. Durch eine Dotierung mit diesen Elementen kann beispielsweise das Sinterverhalten, wie das Schrumpfverhalten oder der thermische Ausdehnungskoeffizient, beeinflusst werden. Vorteilhafterweise ist das Sinterverhalten des PTC-Elements hierbei auf das Sinterverhalten des Kondensatorbereiches abgestimmt.

Das PTC-Element kann des Weiteren auch mit Übergangsmetallen/Übergangsmetalloxiden oder Seltenerdmetallen/Seltenerdmetalloxiden und Kombinationen daraus dotiert sein.

In einer weiteren Ausführungsform der Erfindung handelt es sich bei dem ersten Heizelement um ein Peltier-Element.

Grundlage für den Peltier-Effekt ist der Kontakt von beispielsweise zwei Halbleitern, die ein unterschiedliches Energieniveau (entweder p- oder n-leitend) der Leitungsbänder besitzen. Leitet man einen Strom durch zwei hintereinanderliegende Kontaktstellen dieser Materialien, so muss auf der einen Kontaktstelle Wärmeenergie aufgenommen werden, damit das Elektron in das energetisch höhere Leitungsband des benachbarten Halbleitermaterials gelangt, folglich kommt es zur Abkühlung. Auf der anderen Kontaktstelle fällt das Elektron von einem höheren auf ein tieferes Energieniveau, so dass hier Energie in Form von Wärme abgegeben wird.

Das Peltier-Element kann beispielsweise aus zwei oder mehreren kleinen Quadern je aus p- und n-dotiertem Halbleitermaterial bestehen, wie beispielsweise Bismut-Tellurid bzw. Silizium-Germanium. Es können beispielsweise immer zwei unterschiedliche Quader sind so miteinander verbunden, dass sie eine Reihenschaltung ergeben. Der zugeführte elektrische Strom durchfließt dann alle Quader nacheinander. Abhängig von Stromstärke und -richtung kühlen sich die einen Verbindungsstellen ab, während die anderen sich erwärmen. Der Strom pumpt somit Wärme von einer Seite auf die andere.

Das Peltier-Elementen kann beispielsweise aus zwei quadratischen Platten aus Aluminiumoxid-Keramik bestehen, zwischen denen die Halbleiter-Quader eingelötet sind.

Auch ein solches Peltier-Element kann von seinen Leistungsdaten her so angepasst werden, dass durch das Anlegen der entsprechenden Spannung dieses auf die gewünschte Temperatur aufgeheizt werden kann.

In einer weiteren Ausführungsform der Erfindung umfasst der Kondensator zusätzlich einen zweiten Kondensatorbereich, wobei der zweite Kondensatorbereich und das erste Heizelement thermisch leitend miteinander verbunden sind.

Somit ist es möglich, dass über das erste Heizelement nicht nur der erste Kondensatorbereich, sondern zeitgleich auch ein weiterer Kondensatorbereich mit Wärme versorgt wird, was auch entsprechend in dem zweiten Kondensatorbereich zu der Leistungssteigerung führt, wie sie vorab in Zusammenhang mit dem ersten Kondensatorbereich dargelegt wurde.

In einer weiteren Ausführungsform der Erfindung ist das erste Heizelement zwischen dem zweiten Kondensatorbereich und dem ersten Kondensatorbereich angeordnet.

Dadurch dass der erste und der zweite Kondensatorbereich an zwei sich gegenüberliegenden Seiten des ersten Heizelements angeordnet sind, ist es möglich, beide Kondensatorbereiche auf die zwei Hauptflächen des ersten Heizelements anzuordnen. Hierdurch ist es möglich, dass sowohl der erste Kondensatorbereich wie auch der zweite Kondensatorbereich großflächig mit dem ersten Heizelement verbunden sind, wodurch eine sehr gute Wärmeübertragung von dem ersten Heizelement in beide Kondensatorbereiche erfolgen kann. Diese symmetrische Anordnung stellt des Weiteren sicher, dass die beiden Kondensatorbereiche durch das erste Heizelement jeweils mit der gleichen Wärmemenge versorgt werden kann, was wiederum zur Folge hat, dass für den Fall, dass der erste Kondensatorbereich und der zweite Kondensatorbereich baugleich sind, diese auch die gleiche Leistungssteigerung durch die Wärmezufuhr erfahren, und somit die gleiche gesteigerte Leistung erbringen können.

In einer weiteren Ausführungsform der Erfindung umfasst der Kondensator zusätzlich eine erste thermische leitfähige Schicht, welche zwischen dem ersten Heizelement und dem ersten Kondensatorbereich angeordnet ist, und/oder eine zweite thermische leitfähige Schicht, welche zwischen dem ersten Heizelement und dem zweiten Kondensatorbereich angeordnet ist.

Somit kann der Kondensator sowohl eine erste thermische leitfähige Schicht umfassen, oder eine zweite thermische leitfähige Schicht, oder aber auch eine erste und eine zweite thermische leitfähige Schicht. Bei der thermischen leitfähigen Schicht kann es sich beispielsweise um eine Haftschicht handeln. Es kann sich hierbei auch um eine Schicht handeln, welche die Wärmeübertragung von dem Heizelement in den Kondensatorbereich begünstigt. Dies kann beispielsweise dadurch erfolgen, dass die Wärme sehr zügig von dem Heizelement abgeführt wird, sodass es zu keinem Wärmestau an der Grenzfläche zwischen dem Heizelement und dem Kondensatorbereich kommt. Vorzugsweise weisen sowohl die erste wie auch die zweite thermische leitfähige Schicht eine thermische Leitfähigkeit auf, die über der thermischen Leitfähigkeit des Heizelementes liegt. Die erste thermisch leitfähige Schicht kann auch in jenen Ausführungsformen vorliegen, welche nur einen ersten Kondensatorbereich und keinen zweiten Kondenstorbereich umfassen.

In einer weiteren Ausführungsform der Erfindung umfasst der Kondensator eine Kontaktierung, welche elektrisch leitend mit dem ersten Heizelement verbunden ist, sodass eine Spannung an das erste Heizelement angelegt werden kann.

Dadurch, dass das erste Heizelement eine eigene Kontaktierung aufweist, kann das Heizelement unabhängig von der Betriebsspannung des Kondensators mit Spannung versorgt werden, und somit auch unabhängig von der Betriebsspannung des Kondensators auf eine gewünschte Temperatur aufgeheizt werden.

In einer weiteren Ausführungsform der Erfindung umfasst der Kondensator zusätzlich ein zweites Heizelement, wobei der erste Kondensatorbereich zwischen dem ersten Heizelement und dem zweiten Heizelement angeordnet ist.

Dadurch dass der erste Kondensatorbereich zwischen dem ersten Heizelement und dem zweiten Heizelement angeordnet ist, ist es möglich, den ersten Kondensatorbereich von zwei gegenüberliegenden Seiten mit Wärme zu versorgen. Durch die symmetrische Anordnung der beiden Heizelemente bezüglich des Kondensatorbereichs ist es möglich, den Kondensatorbereich somit auch gleichförmig, symmetrisch in Bezug auf eine Mittelebene aufzuheizen. Dies hat den Vorteil, dass es vom einen Ende zum anderen Ende des Kondensatorbereichs kein durchgehendes Temperaturgefälle vorliegt, welches auch ein entsprechendes Gefälle der Dielektrizitätskonstanten mit sich führen könnte.

In einer weiteren erfindungsgemäßen Ausführungsform umfasst der Kondensator zusätzlich eine erste Metallisierungsschicht und eine zweite Metallisierungsschicht, wobei die erste Metallisierungsschicht auf einer ersten Hauptoberfläche des ersten Heizelements, und die zweite Metallisierungsschicht auf einer zweiten gegenüberliegenden Hauptoberfläche des ersten Heizelements angeordnet ist.

Durch eine elektrische Kontaktierung, welche elektrisch leitend nicht nur mit dem ersten Heizelement selbst, sondern auch mit einer der Metallisierungsschichten verbunden ist, ist es möglich, das erste Heizelement nicht nur direkt über die Kontaktierung mit Spannung zu versorgen, sondern auch indirekt über die erste beziehungsweise zweite Metallisierungsschicht. Vorzugsweise sind die erste Metallisierungsschicht und die zweite Metallisierungsschicht großflächig auf dem ersten Heizelement ausgeformt. Somit kann das erste Heizelement auch großflächig mit Spannung versorgt werden, und beispielsweise nicht nur über schmale Seitenflächen. Die großflächige Spannungsversorgung hat den Vorteil, dass das erste Heizelement zum einen sehr schnell aufgeheizt werden kann, zum anderen, dass dieses über seine gesamte Fläche gleichförmig aufgeheizt wird. Das gleichförmige Aufheizen hat wiederum den Vorteil, dass die darauf folgende thermisch leitfähige Schicht oder der direkt darauf folgende Kondensatorbereich ebenfalls gleichförmig, also über die gesamte Fläche, mit der gleichen Wärmemenge versorgt werden kann.

In einer weiteren Ausführungsform der Erfindung weist das zweite Heizelement entsprechend eine dritte Metallisierungsschicht beziehungsweise vierte Metallisierungsschicht auf, für die entsprechendes gilt, was zuvor im Zusammenhang mit dem ersten beziehungsweise zweiten Metallisierungsschicht ausgeführt wurde.

In einer weiteren Ausführungsform der Erfindung umfasst der Kondensator eine Verkapselung, welche das erste Heizelement und den ersten Kondensatorbereich thermisch gegen die Umgebung isoliert.

Durch die thermische Isolierung gegenüber der Umgebung kann sichergestellt werden, dass ein Großteil der Wärme, welche im ersten beziehungsweise zweiten Heizelement generiert wird, auf den angrenzenden Kondensatorbereich beziehungsweise die angrenzenden Kondensatorbereiche übertragen wird, und nicht an die Umgebung freigesetzt wird. Hierdurch wird die Effizienz des Heizelementes im Bezug auf die angelegte Spannung erhöht. Die Verkapselung kann des Weiteren auch zusätzliche Schichten wie beispielsweise die thermisch leitfähigen Schichten oder die Metallisierungen verkapseln.

In einer weiteren Ausführungsform der Erfindung umfasst der Kondensator einen Temperatursensor, welcher ein Signal über die Temperatur im ersten Kondensatorbereich übermittelt.

Der Temperatursensor kann hierbei beispielsweise direkt im Kondensatorbereich angeordnet sein, er kann aber auch beispielsweise in seiner direkten Umgebung angeordnet sein. Der Kondensator kann einen einzelnen Temperatursensor umfassen, er kann aber auch mehrere Temperatursensoren umfassen, wobei hier jeder Kondensatorbereich seinen eigenen Temperatursensor aufweisen kann. Hierdurch kann die Temperatur jedes einzelnen Kondensatorbereichs getrennt überwacht werden.

Neben dem Kondensator werden auch Kondensatormodule beansprucht.

In einer Ausführungsform eines erfindungsgemäßen Kondensatormoduls umfasst dieses einen ersten Kondensator und einen zweiten Kondensator, welche jeweils einem der zuvor ausgeführten Ausführungsformen entsprechen, wobei der erste Kondensator und der zweite Kondensator durch eine gemeinsame Verkapselung thermisch gegen die Umgebung isoliert sind.

Vorzugsweise ist das gesamte Kondensatormodul durch eine einheitliche gesamte Verkapselung thermisch gegen die Umgebung isoliert. Das Kondensatormodul kann des Weiteren auch noch mehrere zusätzliche Kondensatoren umfassen, welche dann ebenfalls thermisch gegen die Umgebung isoliert sind. Durch die thermische Isolierung wird die Effizienz der in den einzelnen Kondensatoren vorhandenen Heizelemente im Bezug auf die angelegte Spannung, der hieraus resultierenden Wärme, und des Anteils der Wärme, welche auf die einzelnen Kondensatorenbereiche übertragen wird, gesteigert.

In einer weiteren Ausführungsform des Kondensatormoduls weisen der erste Kondensator und der zweite Kondensator ein gemeinsames erstes Heizelement auf. Zusätzlich können beide Kondensatoren auch noch ein gemeinsames zweites Heizelement aufweisen. Für den Fall, dass mehr als zwei Kondensatoren im Kondensatormodul vorliegen, können alle diese Kondensatoren, beispielsweise an sich gegenüberliegenden Seiten, durch jeweils ein gemeinsames Heizelement beheizt werden.

Im Folgenden werden Ausführungsbeispiele der Erfindung anhand von Figuren näher erläutert.
- Figur 1: zeigt einen schematischen Querschnitt durch ein erfindungsgemäßes Ausführungsbeispiel mit einem Heizelement und einem Kondensatorbereich,
- Figur 2: zeigt einen schematischen Querschnitt durch ein erfindungsgemäßes Ausführungsbeispiel mit einem Heizelement und zwei Kondensatorenbereichen,
- Figur 3: zeigt einen schematischen Querschnitt durch ein erfindungsgemäßes Ausführungsbeispiel mit zwei Heizelementen und einem Kondensatorbereich,
- Figur 4: zeigt ein erfindungsgemäßes Ausführungsbeispiel mit thermisch leitfähigen Schichten,
- Figur 5: zeigt ein erfindungsgemäßes Ausführungsbeispiel mit Metallisierungsschichten,
- Figuren 6a und 6b: zeigen ein erfindungsgemäßes Ausführungsbeispiel in zwei unterschiedlichen Ansichten, welches Kontaktierungen aufweist,
- Figur 7: zeigt ein erfindungsgemäßes Ausführungsbeispiel im schematischen Querschnitt, welches verkapselt ist,
- Figuren 8a und 8b: zeigen jeweils ein Ausführungsbeispiel eines erfindungsgemäßen Kondensatormoduls,
- Figur 9: zeigt einen erfindungsgemäßen Kondensatorbereich mit innerer Serienschaltung.
- Figur 10: zeigt die feldabhängige Polarisation (a) und die temperaturabhängige Kapazität (b) verschiedener antiferrolektrischer Materialien.
- Figur 11: zeigt die Temperaturabhängigkeit der differentiellen Dielektrizitätskonstante (a) und der Schaltfeldstärke (b) eines beispielhaften antiferroelektrischen Materials.

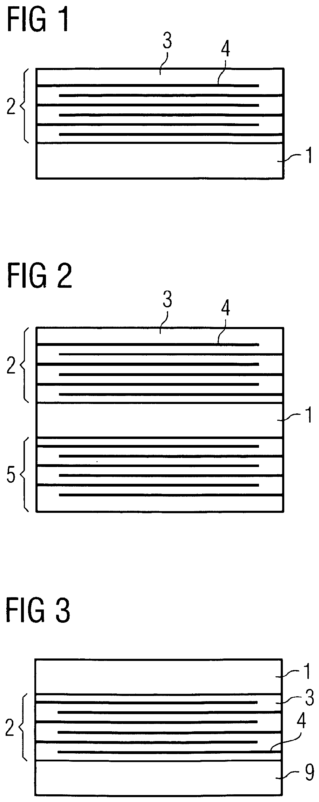

In Figur 1 ist ein Ausführungsbeispiel dargestellt, welches ein erstes Heizelement 1 umfasst, auf dem ein erster Kondensatorbereich 2 angeordnet ist. Der erste Kondensatorbereich 2 umfasst dielektrische Schichten 3, zwischen denen die Innenelektroden 4 angeordnet sind. Durch den direkten Kontakt des ersten Heizelements 1 und des ersten Kondensatorbereichs 2 kann die im ersten Heizelement 1 erzeugte Wärme direkt auf den ersten Kondensatorbereich 2 übertragen werden, wodurch beispielsweise die Dielektrizitätskonstante der dielektrischen Schichten 3 erhöht werden kann, was zu Leistungssteigerung des Kondensators führt. Hierzu wird für die dielektrischen Schichten 3 ein Material verwendet, dessen Dielektrizitätskonstante mit steigender Temperatur ansteigt. Dies gilt zumindest für den Temperaturbereich, auf den das erste Heizelement 1 aufgeheizt werden kann. Materialien für dielektrische Schichten können ferroelektrische oder antiferroelektrische Materialien umfassen. Dies gilt auch für die dielektrischen Schichten der folgenden Figuren. Für die Innenelektroden 4 kann beispielsweise eines der folgenden Metalle/Legierungen verwendet werden: Ni, Cu, Ag, AgPd, Pd.

Das Ausführungsbeispiel, welches in Figur 2 als schematischer Querschnitt dargestellt ist, umfasst ein erstes Heizelement 1, auf dessen Oberseite ein erster Kondensatorbereich 2 und auf dessen Unterseite ein zweiter Kondensatorbereich 5 angeordnet ist. Jeder der beiden Kondensatorbereichen umfasst jeweils dielektrische Schichten 3 sowie dazwischen angeordnete Innenelektroden 4. Durch das erste Heizelement 1 können somit zeitgleich sowohl der erste Kondensatorbereich 2 wie auch der zweite Kondensatorbereich 5 mit Wärme versorgt werden, und diese dadurch auf die gewünschte Temperatur aufgeheizt werden.

Figur 3 zeigt im schematischen Querschnitt ein Ausführungsbeispiel, welches einen ersten Kondensatorbereich 2 umfasst, auf dessen Oberseite ein erstes Heizelement 1 und auf dessen Unterseite ein zweites Heizelement 9 angeordnet ist. Der erste Kondensatorbereich 2 umfasst wiederum dielektrische Schichten 3 und Innenelektroden 4. Durch diese bezüglich des ersten Kondensatorbereichs 2 symmetrisch angeordneten Heizelemente kann der erste Kondensatorbereich 2 von zwei gegenüberliegenden Seiten mit der gleichen Wärmemenge versorgt werden. Hierdurch wird der erste Kondensatorbereich 2 gleichmäßiger aufgeheizt, was auch eine gleichmäßigere Änderung der Dielektrizitätskonstanten der dielektrischen Schichten 3 zur Folge hat.

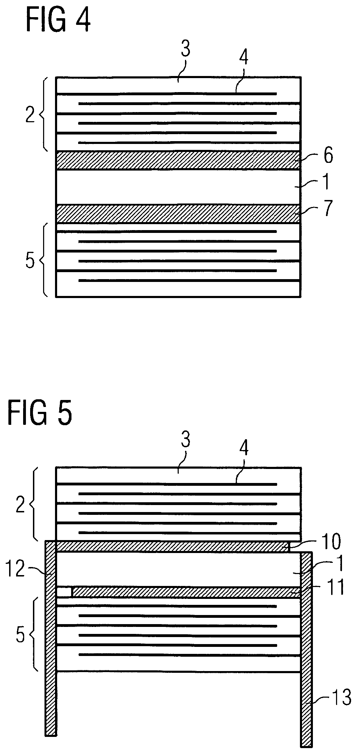

Figur 4 zeigt im schematischen Querschnitt ein Ausführungsbeispiel, welches dem Ausführungsbeispiel entspricht, wie es in Figur 2 dargestellt ist, welches noch zusätzlich eine erste thermische leitfähige Schicht 6 zwischen dem ersten Heizelement 1 und dem ersten Kondensatorbereich 2, sowie eine zweite thermische leitfähige Schicht 7 zwischen dem ersten Heizelement 1 und dem zweiten Kondensatorbereich 5 aufweist. Bei der ersten thermischen leitfähigen Schicht 6 beziehungsweise der zweiten thermischen leitfähigen Schicht 7 kann es sich beispielsweise um Haftschichten handeln, welche das erste Heizelement 1 thermisch leitfähig und mechanisch mit den angrenzenden Kondensatorbereichen verbindet. Die beiden thermisch leitfähigen Schichten können durch ihre sehr gute thermische Leitfähigkeit auch dazu beitragen, dass die Wärme von dem ersten Heizelement 1 auf die angrenzenden Kondensatorbereiche übertragen werden kann. Durch die thermisch leitfähigen Schichten kann beispielsweise ein Wärmestau verhindert werden, welcher an einer direkten Kontaktfläche zwischen Heizelement und Kondensatorbereich auftreten könnte.

Die Figur 5 zeigt ein Ausführungsbeispiel, welches dem Ausführungsbeispiel entspricht, wie es in Figur 2 dargestellt ist, und zusätzlich auf der Oberseite des ersten Heizelements 1 eine erste Metallisierungsschicht 10 aufweist und auf der Unterseite des ersten Heizelements 1 eine zweite Metallisierungsschicht 11. Zusätzlich weist dieses Ausführungsbeispiel auch noch eine Kontaktierung der ersten Metallisierungsschicht 12 auf, welche sowohl die erste Metallisierungsschicht 10 wie auch das erste Heizelement 1 elektrisch leitend kontaktiert. Ebenso ist auch die zweite Metallisierungsschicht 11 über eine Kontaktierung der zweiten Metallisierungsschicht 13 elektrisch leitend kontaktiert, sowie wiederum auch direkt das erste Heizelement 1. Durch einen solchen Aufbau kann das erste Heizelement 1 nicht nur von den schmalen Seitenflächen her mit Spannung versorgt werden, sondern auch großflächig von der gesamten Oberseite beziehungsweise Unterseite. Dies hat ein schnelles und gleichförmiges Aufheizen des ersten Heizelements 1 zur Folge.

In Ausführungsbeispielen, welche über mehr als ein Heizelement verfügen, können entsprechend alle Heizelemente solche Metallisierungsschichten und die entsprechenden Kontaktierungen aufweisen.

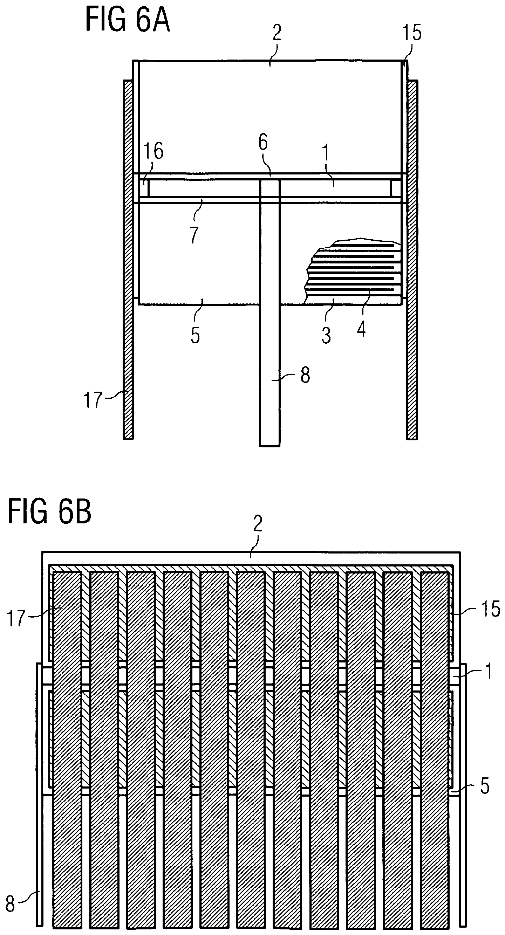

In den Figuren 6a und 6b ist jeweils ein Ausführungsbeispiel in zwei unterschiedlichen schematischen Seitenansichten dargestellt. Das in Figur 6a dargestellte Ausführungsbeispiel umfasst zusätzlich, verglichen mit dem Ausführungsbeispiel aus Figur 4, eine Kontaktierung des ersten Heizelements 8 sowie an den beiden Seiten verlaufende elektrisch leitende Anschlüsse 17. An den beiden Seitenflächen weist das erste Heizelement 1 jeweils Isolierungen 16 auf. Der erste Kondensatorbereich 2 sowie der zweite Kondensatorbereich 5 weisen an ihren Seitenflächen jeweils Kondensatorabschlüsse 15 auf. In der rechten unteren Ecke des zweiten Kondensatorbereichs 5 sind schematisch die dielektrische Schichten 3 sowie die Innenelektroden 4 angedeutet.

In Figur 6b ist das gleiche Ausführungsbeispiel wie in Figur 6a, nur jetzt als schematische Seitenansicht von einer anderen Seite dargestellt. Hier ist zu erkennen, dass das erste Heizelement 1 an beiden Seitenflächen jeweils eine Kontaktierung des ersten Heizelements 8 aufweist. In diesem Ausführungsbeispiel umfasst der Kondensator eine Vielzahl von elektrisch leitenden Anschlüssen 17, welche nebeneinander angeordnet sind.

In einem weiteren Ausführungsbeispiel (nicht dargestellt) umfasst das in den Figuren 6a und 6b dargestellte Ausführungsbeispiel zusätzlich noch die erste Metallisierungsschicht 10 und zweite Metallisierungsschicht 11, wie sie in Zusammenhang mit dem Ausführungsbeispiel von Figur 5 erläutert wurden.

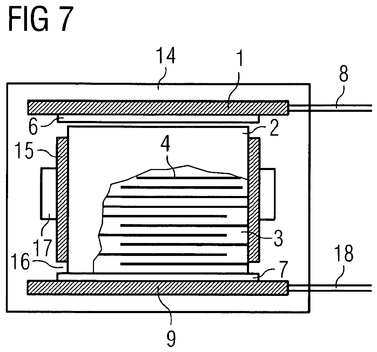

Die Figur 7 zeigt ein weiteres erfindungsgemäßes Ausführungsbeispiel. Dieses umfasst einen ersten Kondensatorbereich 2, auf dessen Oberseite eine erste thermische leitfähige Schicht 6 und auf dessen Unterseite eine zweite thermische leitfähige Schicht 7 angeordnet sind. Auf jedem der beiden Seitenflächen ist jeweils ein Kondensatorabschluss 15 angeordnet, welcher jeweils einen elektrisch leitenden Anschluss 17 aufweist. Im rechten unteren Bereich des ersten Kondensatorbereichs 2 sind schematisch die dielektrischen Schichten 3 und die dazwischen liegenden Innenelektroden 4 angedeutet. Auf der ersten thermisch leitfähigen Schicht 6 ist ein erstes Heizelement 1 angeordnet, welches mit Kontaktierungen des ersten Heizelements 8 versehen ist. Spiegelbildlich dazu ist entsprechend auf der zweiten thermisch leitfähigen Schicht 7 ein zweites Heizelement 9 angeordnet, welches seinerseits mit Kontaktierungen des zweiten Heizelements 18 kontaktiert ist. Der gesamte Kondensator ist über eine Verkapselung 14 gegenüber der Umgebung thermisch isoliert. Die Verkapselung 14 wird lediglich durch die elektrischen Kontaktierungen unterbrochen.

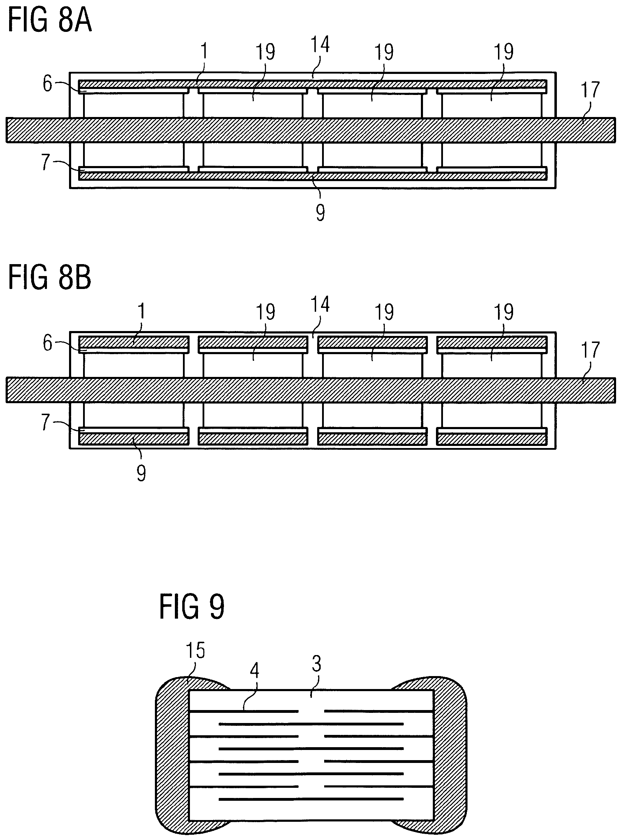

Figur 8a zeigt ein Ausführungsbeispiel für ein Kondensatormodul in einer schematischen Seitenansicht. Dieses umfasst einen ersten Kondensator sowie drei weiteren Kondensatoren 19, welche jeweils nebeneinander angeordnet sind. Auf dem ersten Kondensator ist auf der Oberseite eine erste thermisch leitfähige Schicht 6 und auf der Unterseite eine zweite thermische leitfähige Schicht 7 angeordnet. Die drei weiteren Kondensatoren 19 umfassen jeweils auch diese beiden thermisch leitfähigen Schichten auf ihrer Oberbeziehungsweise Unterseite. Das Kondensatormodul umfasst ein erstes Heizelement 1 und ein zweites Heizelement 9, welche jeweils thermisch leitfähig mit den einzelnen Kondensatoren an gegenüberliegenden Seiten verbunden sind. Seitlich entlang des Kondensatormoduls verläuft ein elektrisch leitender Anschluss 17. Die Kondensatoren sowie die Heizelemente sind von einer Verkapselung 14 thermisch leitend gegenüber der Umgebung isoliert.

Das in Figur 8b dargestellte Kondensatormodul unterscheidet sich von dem in Figur 8a gezeigtem Kondensatormodul lediglich dadurch, dass die einzelnen Kondensatoren jeweils über eigene, separate Heizelemente 1 und 9 verfügen.

Figur 9 zeigt einen Kondensator, bei dem die Innenelektroden 4 in den dielektrischen Schichten 3 so angeordnet sind, dass eine innere Serienschaltung vorliegt. Diese Anordnung der Innenelektroden 4 kann auch bei allen zuvor beschriebenen Ausführungsbeispielen vorliegen. Der Kondensator weist des Weiteren an seinen beiden Seitenflächen einen Kondensatorabschluss 15 auf.

Durch die innere Serienschaltung kann beispielsweise gleichzeitig das Spannungsrating und die Robustheit gegenüber Fehlfunktionen deutlich erhöht werden, da einzelne Fehlstellen im Keramikkörper somit nicht zu hohen Leckströmen führen können. Die Innenelektroden 4 können, unabhängig von ihrer Anordnung, beispielsweise über Durchkontaktierungen (Vias) mit äußeren Kontaktflächen oder Kontaktierungen elektrisch leitend verbunden sein.

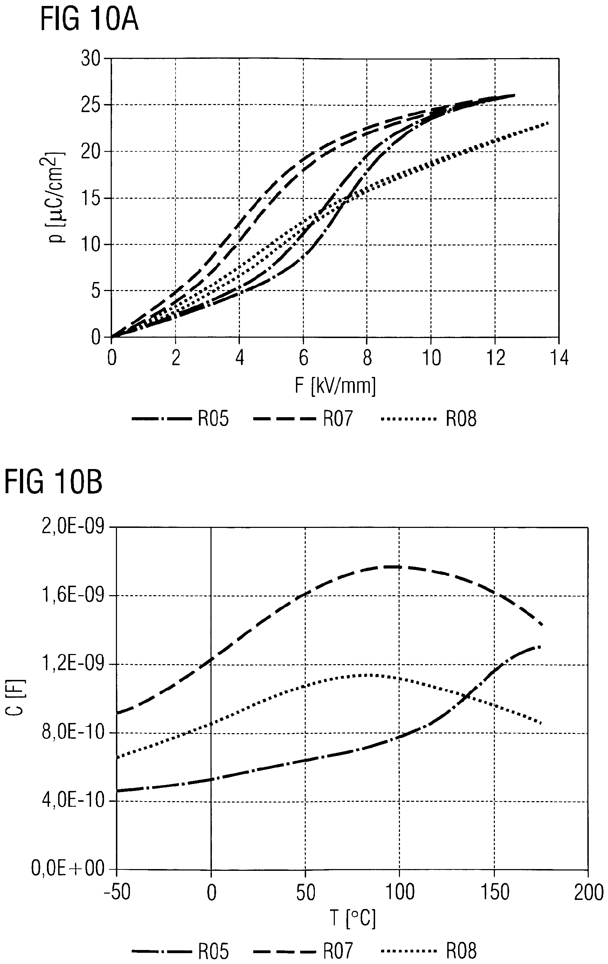

Figur 10 zeigt die feldabhängige Polarisation (a) und die temperaturabhängige Kapazität (b) verschiedener antiferrolektrischer Materialien. Das Material R05 ist Pb_{0,925}La_{0,06}(Zr_{0,86}Ti_{0,14})O₃, das Material R07 ist Pb_{0,895}La_{0,08} (Zr_{0,80}Ti_{0,20}) O₃ und das Material R08 ist Pb_{0,880}La_{0,09} (Zr_{0,80}Ti_{0,20}) O₃. In Figur 10a ist die Hysteresekurve, die die Polarisation P in µC/cm² in Abhängigkeit des Feldes F in kV/mm bildet, dieser Materialien gezeigt, die aufgrund ihres Verhaltens gut als Material für die dielektrische Schichten (3) eingesetzt werden können. In Figur 10b ist die Kapazität C in F in Abhängigkeit der Temperatur T in °C gezeigt.

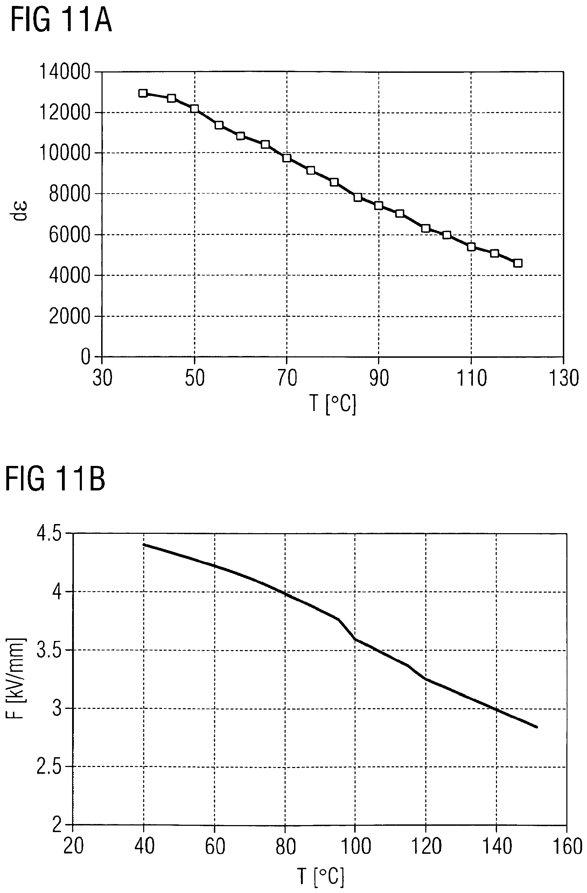

Figur 11a zeigt die Temperaturabhängigkeit der differentiellen Dielektrizitätskonstante dε eines beispielhaften antiferroelektrischen Materials. Mit zunehmender Temperatur T ändert sich die Dielektrizitätskonstante des Materials bei vorgegebener Feldstärke F von 0 bis 5 kV als Funktion der Temperatur. Man erkennt, dass die Änderung der Dielektrizitätskonstante bei vorgegebener Spannung als Funktion der Temperatur geringer wird.

Figur 11b zeigt die Schaltfeldstärke F in kV/mm als Funktion der Temperatur T in °C eines beispielhaften antiferroelektrischen Materials bei vorgegebener Rezeptur. Somit kann mittels Rezeptur des Materials und Temperaturwahl ein Arbeitsbereich vorbestimmt werden, der die bestmögliche Ausnutzung des antiferroelektrischen Effektes in der dielektrischen Schicht bietet.
Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

### Bezugszeichenliste

- 1): erstes Heizelement
- 2): erster Kondensatorbereich
- 3): dielektrische Schichten
- 4): Innenelektroden
- 5): zweiter Kondensatorbereich
- 6): erste thermisch leitfähige Schicht
- 7): zweite thermisch leitfähige Schicht
- 8): Kontaktierung des ersten Heizelements
- 9): zweites Heizelement
- 10): erste Metallisierungsschicht
- 11): zweite Metallisierungsschicht
- 12): Kontaktierung der ersten Metallisierungsschicht
- 13): Kontaktierung der zweiten Metallisierungsschicht
- 14): Verkapselung
- 15): Kondensatorabschluss
- 16): Isolierung
- 17): elektrisch leitender Anschluss
- 18): Kontaktierung des zweiten Heizelements
- 19): weitere Kondensatoren
- F: Feld
- P: Polarisation
- C: Kapazität
- T: Temperatur
- dε: differentielle Dielektrizitätskonstante

## Patentansprüche

1. Kondensator umfassend die folgenden Bestandteile:
- ein erstes Heizelement (1), bei dem es sich um ein PTC-Element handelt, welches ein Keramikmaterial mit einem positiven Temperaturkoeffizienten bezüglich des Widerstandes umfasst,
- einen ersten Kondensatorbereich (2) umfassend:
-- dielektrische Schichten (3),
-- Innenelektroden (4), welche zwischen den dielektrischen Schichten (3) angeordnet sind,
wobei das erste Heizelement (1) und der erste Kondensatorbereich (2) thermisch leitend miteinander verbunden sind, wobei die dielektrischen Schichten ein antiferroelektrisches Material aufweisen.

2. Kondensator nach Anspruch 1,
wobei die dielektrischen Schichten (3) ein Material umfassen, dessen Dielektrizitätskonstante von der Temperatur abhängig ist.

3. Kondensator nach Anspruch 2,
wobei das erste Heizelement (1) so eingerichtet ist, dass es auf eine Temperatur aufgeheizt werden kann, bei der die Dielektrizitätskonstante des Materials einen Wert erreicht, der über dem Durchschnittswert liegt, der sich aus den Werten für die Dielektrizitätskonstante bei Raumtemperatur und der für das Material maximal möglichen Dielektrizitätskonstanten ergibt.

4. Kondensator nach einem der vorhergehenden Ansprüche, zusätzlich umfassend:
- einen zweiten Kondensatorbereich (5),
wobei der zweite Kondensatorbereich (5) und das erste Heizelement (1) thermisch leitend miteinander verbunden sind.

5. Kondensator nach Anspruch 4,
wobei das erste Heizelement (1) zwischen dem zweiten Kondensatorbereich (5) und dem ersten Kondensatorbereich (2) angeordnet ist.

6. Kondensator nach einem der vorhergehenden Ansprüche, zusätzlich umfassend:
- eine erste thermisch leitfähige Schicht (6), welche zwischen dem ersten Heizelement (1) und dem ersten Kondensatorbereich (2) angeordnet ist und/oder gegebenenfalls
- eine zweite thermisch leitfähige Schicht (7), welche zwischen dem ersten Heizelement (1) und dem zweiten Kondensatorbereich (5) angeordnet ist.

7. Kondensator nach einem der vorhergehenden Ansprüche, zusätzlich umfassend:
- eine Kontaktierung (8), welche elektrisch leitend mit dem ersten Heizelement (1) verbunden ist, so dass eine Spannung an das erste Heizelement (1) angelegt werden kann.

8. Kondensator nach einem der vorhergehenden Ansprüche, zusätzlich umfassend:
- ein zweites Heizelement (9),
wobei der erste Kondensatorbereich (2) zwischen dem ersten Heizelement (1) und dem zweiten Heizelement (9) angeordnet ist.

9. Kondensator nach einem der vorhergehenden Ansprüche, zusätzlich umfassend:
- eine erste Metallisierungsschicht (10) und eine zweite Metallisierungsschicht (11),
wobei die erste Metallisierungsschicht (10) auf einer ersten Hauptoberfläche des ersten Heizelements (1), und die zweite Metallisierungsschicht (11) auf einer zweiten gegenüberliegenden Hauptoberfläche des ersten Heizelements (1) angeordnet ist.

10. Kondensator nach einem der vorhergehenden Ansprüche, zusätzlich umfassend:
- eine Verkapselung (14), welche das erste Heizelement (1) und den ersten Kondensatorbereich (2) thermisch gegen die Umgebung isoliert.

11. Kondensator nach einem der vorhergehenden Ansprüche, zusätzlich umfassend:
- einen Temperatursensor, welcher ein Signal über die Temperatur im ersten Kondensatorbereich (2) übermittelt.

12. Kondensatormodul umfassend,
- einen ersten Kondensator nach einem der Ansprüche 1 bis 11,
- einen zweiten Kondensator nach einem der Ansprüche 1 bis 11,
wobei der erste Kondensator und der zweite Kondensator durch eine gemeinsame Verkapselung (14) thermisch gegen die Umgebung isoliert sind.

13. Kondensatormodul nach Anspruch 12,
wobei dem ersten Kondensator und dem zweiten Kondensator ein gemeinsames erstes Heizelement zugeordnet ist.

## Claims

1. Capacitor comprising the following components:
- a first heating element (1), which is a PTC element, which comprises a ceramic material with a positive temperature coefficient with regard to resistance,
- a first capacitor region (2), comprising:
-- dielectric layers (3),
-- internal electrodes (4), which are arranged between the dielectric layers (3),
wherein the first heating element (1) and the first capacitor region (2) are connected together thermally conductively, wherein the dielectric layers comprise an antiferroelectric material.

2. Capacitor according to Claim 1,
wherein the dielectric layers (3) comprise a material, the dielectric constant of which is temperature-dependent.

3. Capacitor according to Claim 2,
wherein the first heating element (1) is configured such that it may be heated to a temperature at which the dielectric constant of the material reaches a value which lies above the average value resulting from the values for the dielectric constant at room temperature and the maximum possible dielectric constant for the material.

4. Capacitor according to one of the preceding claims, additionally comprising
- a second capacitor region (5),
wherein the second capacitor region (5) and the first heating element (1) are connected together in thermally conductive manner.

5. Capacitor according to Claim 4,
wherein the first heating element (1) is arranged between the second capacitor region (5) and the first capacitor region (2).

6. Capacitor according to one of the preceding claims, additionally comprising:
- a first thermally conductive layer (6), which is arranged between the first heating element (1) and the first capacitor region (2) and/or optionally
- a second thermally conductive layer (7), which is arranged between the first heating element (1) and the second capacitor region (5).

7. Capacitor according to one of the preceding claims, additionally comprising:
- a contacting means (8), which is connected electrically conductively with the first heating element (1), such that a voltage may be applied to the first heating element (1).

8. Capacitor according to one of the preceding claims, additionally comprising:
- a second heating element (9),
wherein the first capacitor region (2) is arranged between the first heating element (1) and the second heating element (9).

9. Capacitor according to one of the preceding claims, additionally comprising:
- a first metallization layer (10) and a second metallization layer (11),
wherein the first metallization layer (10) is arranged on a first major surface of the first heating element (1), and the second metallization layer (11) is arranged on a second, opposing major surface of the first heating element (1).

10. Capacitor according to one of the preceding claims, additionally comprising:
- an encapsulation (14), which insulates the first heating element (1) and the first capacitor region (2) thermally from the surrounding environment.

11. Capacitor according to one of the preceding claims, additionally comprising:
- a temperature sensor, which transmits a signal relating to the temperature in the first capacitor region (2).

12. Capacitor module, comprising,
- a first capacitor according to one of Claims 1 to 11,
- a second capacitor according to one of Claims 1 to 11, wherein the first capacitor and the second capacitor are insulated thermally from the surrounding environment by a common encapsulation (14).

13. Capacitor module according to Claim 12,
wherein a common first heating element is assigned to the first capacitor and to the second capacitor.

## Revendications

1. Condensateur comprenant les composants suivants :
- un premier élément chauffant (1), pour lequel il s'agit d'un élément PTC, qui comprend un matériau céramique pourvu d'un coefficient de température positive par rapport à la résistance,
- une première zone de condensateur (2) comprenant :
-- des couches diélectriques (3),
-- des électrodes internes (4) qui sont disposées entre les couches diélectriques (3), le premier élément chauffant (1) et la première zone de condensateur (2) étant reliés l'un à l'autre de manière thermoconductrice, les couches diélectriques présentant un matériau antiferroélectrique.

2. Condensateur selon la revendication 1,
les couches diélectriques (3) comprenant un matériau dont la constante diélectrique dépend de la température.

3. Condensateur selon la revendication 2,
le premier élément chauffant (1) étant conçu de manière telle qu'il peut être chauffé à une température à laquelle la constante diélectrique du matériau atteint une valeur qui est supérieure à la valeur moyenne obtenue à partir des valeurs pour la constante diélectrique à température ambiante et celles pour la constante diélectrique maximale possible pour le matériau.

4. Condensateur selon l'une quelconque des revendications précédentes, comprenant en plus
- une deuxième zone de condensateur (5), la deuxième zone de condensateur (5) et le premier élément chauffant (1) étant reliés l'un à l'autre de manière thermoconductrice.

5. Condensateur selon la revendication 4,
le premier élément chauffant (1) étant disposé entre la deuxième zone de condensateur (5) et la première zone de condensateur (2).

6. Condensateur selon l'une quelconque des revendications précédentes, comprenant en plus :
- une première couche thermoconductrice (6), qui est disposée entre le premier élément chauffant (1) et la première zone de condensateur (2) et/ou le cas échéant
- une deuxième couche thermoconductrice (7), qui est disposée entre le premier élément chauffant (1) et la deuxième zone de condensateur (5).

7. Condensateur selon l'une quelconque des revendications précédentes, comprenant en plus :
- un contact (8) qui est connecté de manière électroconductrice au premier élément chauffant (1) de telle sorte qu'une tension peut être appliquée au premier élément chauffant (1).

8. Condensateur selon l'une quelconque des revendications précédentes, comprenant en plus :
- un deuxième élément chauffant (9),
la première zone de condensateur (2) étant disposée entre le premier élément chauffant (1) et le deuxième élément chauffant (9).

9. Condensateur selon l'une quelconque des revendications précédentes, comprenant en plus :
- une première couche de métallisation (10) et une deuxième couche de métallisation (11),
la première couche de métallisation (10) étant disposée sur une première surface principale du premier élément chauffant (1) et la deuxième couche de métallisation (11) étant disposée sur une deuxième surface principale opposée du premier élément chauffant (1).

10. Condensateur selon l'une quelconque des revendications précédentes, comprenant en plus :
- une encapsulation (14) qui isole thermiquement le premier élément chauffant (1) et la première zone de condensateur (2) par rapport à l'environnement.

11. Condensateur selon l'une quelconque des revendications précédentes, comprenant en plus :
- un capteur de température, qui transmet un signal concernant la température dans la première zone de condensateur (2).

12. Module de condensateur comprenant
- un premier condensateur selon l'une quelconque des revendications 1 à 11,
- un deuxième condensateur selon l'une quelconque des revendications 1 à 11,
le premier condensateur et le deuxième condensateur étant isolés thermiquement par une encapsulation commune (14) par rapport à l'environnement.

13. Module de condensateur selon la revendication 12,
un premier élément chauffant commun étant affecté au premier condensateur et au deuxième condensateur.
